# EUROPÄISCHE PATENTSCHRIFT

(11) **EP 1 742 307 B1**
(45) Veröffentlichungstag und Bekanntmachung des Hinweises auf die Patenterteilung: **20.08.2008**
(21) Anmeldenummer: 05014867.5
(22) Anmeldetag: 08.07.2005
(51) Int. Cl.: H01S 3/00, B23K 26/06, G02B 27/28

(54) **Vorrichtung zur Beeinflussung der Polarisation einer Laserstrahlung**
Apparatus for controlling the polarisation of a laser beam
Dispositif pour le contrôle de la polarisation d'un faisceau laser

(43) Veröffentlichungstag der Anmeldung: 10.01.2007
(73) Patentinhaber: TRUMPF Werkzeugmaschinen GmbH + Co. KG, 71254 Ditzingen (DE)
(72) Erfinder: Boettcher, Christian, 70565 Stuttgart (DE)
(74) Vertreter: Kohler Schmid Möbus

(56) Entgegenhaltungen:
- EP-A- 0 695 599
- EP-A- 0 818 857
- DE-A1- 3 149 044
- DE-A1- 4 434 504
- US-A- 5 878 067
- US-B1- 6 342 981

## Beschreibung

Die vorliegende Erfindung betrifft eine Vorrichtung zur Beeinflussung der Polarisation einer Laserstrahlung mithilfe eines Phasenschieberspiegels und eines die Laserstrahlung umlenkenden Elements, wobei der Phasenschieberspiegel auf einer Außenseite eines ersten Teilkörpers und das umlenkende Element auf einer Außenseite eines zweiten Teilkörpers angebracht sind, und wobei der erste Teilkörper und der zweite Teilkörper mittels einer Dreheinheit um einen vorgebbaren Drehwinkel um eine gemeinsame Drehachse drehbar sind.

Eine solche Vorrichtung ist aus der US-B1-6 342 981 bekannt. Dort wird einfallende Strahlung von einem Reflektor, der eine auf einem Substrat aufgebrachte, phasenschiebende Schicht aufweist, auf ein ebenfalls auf dem Substrat aufgebrachtes Prisma reflektiert, welches zur Umlenkung der reflektierten Strahlung dient. Die Anordnung aus Reflektor und Prisma kann mittels einer Dreheinheit um eine gemeinsame Drehachse gedreht werden.

Für eine richtungsunabhängige Bearbeitung von Werkstücken beim Laserschneiden ist ein hoher zirkularer Polarisationsgrad der Laserstrahlung am Schneidkopf von Laserschneidmaschinen erforderlich. Die aus einem Resonator ohne den Einsatz zusätzlicher optischer Elemente austretende Laserstrahlung ist jedoch in der Regel linear polarisiert.

Aus der DE 31 49 004 A1 ist es bekannt, eine linear polarisierte Laserstrahlung in eine zirkular polarisierte Laserstrahlung umzuwandeln. Hierzu soll eine λ/4-Platte verwendet werden. Dieselbe Funktion kann auch ein Phasenschieberspiegel erfüllen. Ein idealer Phasenschieberspiegel erzeugt bei geeignetem Inzidenzwinkel eine Phasenverschiebung um 90° zwischen einer Polarisationskomponente (s-Polarisation), welche senkrecht zu einer Einfallsebene ausgerichtet ist, und einer Polarisationskomponente (p-Polarisation), welche parallel zur Einfallsebene ausgerichtet ist. Unter der Einfallsebene wird eine Ebene verstanden, die von der Flächennormalen des Phasenschieberspiegels und einem einfallenden Laserstrahl gebildet wird. Durch die Phasenverschiebung um 90° kann aus linearer Polarisation zirkulare Polarisation erzeugt werden (und umgekehrt).

Die mithilfe des phasenschiebenden Elements erzeugte, zirkular polarisierte Laserstrahlung wird an einem die Laserstrahlung umlenkenden Element, wie einem Umlenkspiegel, reflektiert, bevor sie die Vorrichtung zur Beeinflussung der Polarisation verlässt. Der Umlenkspiegel dient für gewöhnlich zur Ausrichtung der aus der Vorrichtung austretenden Laserstrahlung.

Zwischen Laserquelle und Bearbeitungskopf ist eine beliebige Anzahl von Strahlumlenkelementen (Spiegeln) im Strahlverlauf realisiert, wobei die Vorrichtung in diesem Strahlverlauf an beliebiger Stelle positioniert werden kann. Die Spiegel weisen zwar oft eine dielektrische Beschichtung auf, welche verhindern soll, dass bei der Reflexion an ihnen eine Phasenverschiebung auftritt. Das Auftreten einer Phasenverschiebung kann jedoch nicht vollständig verhindert werden, so dass die am Schneidkopf ankommende Laserstrahlung nicht mehr vollständig zirkular polarisiert ist.

Aus der DE 4434504 ist eine Laserschneidmaschine bekannt, bei der ein erster Umlenkspiegel ein zirkular polarisierender Phasenschieberspiegel ist, und bei der ein zweiter bis fünfter Umlenkspiegel derart im Strahlengang angeordnet sind, dass Phasenverschiebungen ausgeglichen werden können, die für Umlenkspiegel spezifisch sind. Zur Kompensation der Phasenverschiebungen sind dort vier Umlenkspiegel notwendig.

Demgegenüber ist es ist die Aufgabe der vorliegenden Erfindung, eine Vorrichtung der eingangs genannten Art dahingehend weiterzubilden, dass eine Kompensation von Phasenverschiebungen unter Einsatz möglichst weniger optischer Elemente erreicht werden kann.

Diese Aufgabe wird erfindungsgemäß durch eine Vorrichtung der eingangs genannten Art gelöst, bei welcher zwei weitere Außenseiten der beiden Teilkörper einander gegenüber liegend verschiebbar angeordnet sind. Die Teilkörper können Vollkörper beispielsweise aus Aluminium mit Aperturen und Strahlführungskanälen oder transparente Körper sein.

Mit der erfindungsgemäßen Vorrichtung lässt sich der zirkulare Polarisationsgrad wesentlich optimieren, ohne dass zusätzliche optische Elemente erforderlich wären. Insbesondere ist es möglich, die Phasenabweichungen der vor- und nachgeordneten Umlenkspiegel (in ihrer Summe) zu korrigieren.

Je nach Inzidenzwinkel der einfallenden Laserstrahlung auf den Phasenschieberspiegel bewirkt dieser je nach Art der phasenschiebenden Beschichtung eine Phasenverschiebung, so dass bei einer einfallenden, linear polarisierten Laserstrahlung eine ausfallende, zirkular polarisierte Laserstrahlung erhalten werden kann. Die Kompensation der Phasenabweichungen der einzelnen Umlenkspiegel, welche dazu führen, dass keine vollständig zirkular polarisierte Laserstrahlung am Schneidkopf ankommt, erfolgt über die Justage des Drehwinkels der gesamten erfindungsgemäßen Vorrichtung.

Durch die Bauweise der Vorrichtung wird sichergestellt, dass bei der Drehung die Richtungen von ein- und ausfallender Laserstrahlung unverändert bleiben. Zum Ausgleich eines Strahlversatzes erfolgt eine Verschiebung des ersten Teilkörpers relativ zum zweiten Teilkörper. Hierdurch wird sichergestellt, dass die ausfallende Laserstrahlung sowohl ihre Richtung als auch ihre Lage beibehält, wenn durch die Drehung die Polarisationsoptimierung vorgenommen wird. In den Teilkörpern vorhandene Strahlführungskanäle für die Laserstrahlung können hierbei für einfallende und ausfallende Laserstrahlung parallel zueinander und um einen vorgebbaren Betrag versetzt verlaufen, oder für einfallende und ausfallende Laserstrahlung unter einem Winkel von 90° zueinander angeordnet sein.

Die Erfindung ist auch realisiert in einer Laserbearbeitungsanlage mit einer Strahlführung für einen Laserstrahl, in der eine Vorrichtung wie oben beschrieben angeordnet ist.

In einer vorteilhaften Ausführungsform ist die Drehachse senkrecht zu einer Lichteinfallsebene des Phasenschieberspiegels ausgerichtet. Die Lichteinfallsebene wird durch die Richtung der einfallenden Laserstrahlung und die Normalenrichtung des Phasenschieberspiegels festgelegt. Durch diese Anordnung der Drehachse wird sichergestellt, dass die Laserstrahlung auch nach der Reflexion auch bei einer Drehung um die Drehachse weiterhin in der Einfallsebene des Phasenschieberspiegels verläuft.

In einer vorteilhaften Ausführungsform sind der Umlenkspiegel und der Phasenschieberspiegel derart angeordnet, dass einfallende und ausfallende Laserstrahlung parallel und um einen vorgebbaren Betrag zueinander versetzt verlaufen.

In einer bevorzugten Weiterbildung dieser Ausführungsform sind der Umlenkspiegel und der Phasenschieberspiegel derart angeordnet, dass einfallende und ausfallende Laserstrahlung parallel zueinander, aber in entgegengesetzter Richtung verlaufen.

In einer alternativen Ausführungsform sind der Umlenkspiegel und der Phasenschieberspiegel derart angeordnet, dass eine Umlenkung der ausfallenden Laserstrahlung um 90° im Vergleich zur einfallenden Laserstrahlung bewirkt wird.

Drei bevorzugte Ausführungsbeispiele der Erfindung werden anhand der schematischen Zeichnung erläutert. Es zeigt:
- Figur 1a,b: eine erste Ausführungsform einer Vorrichtung zur Polarisationsoptimierung mit einem parallel zu einem Phasenschieberspiegel angeordneten Umlenkspiegel in einer Vorderansicht und einer Seitenansicht;
- Figur 2: eine zweite Ausführungsform einer Vorrichtung zur Polarisationsoptimierung mit einem senkrecht zu einem Phasenschieberspiegel angeordneten Umlenkspiegel;
- Figur 3a,b: eine dritte Ausführungsform einer Vorrichtung zur Polarisationsoptimierung mit einem unter einem Winkel zu einem Phasenschieberspiegel angeordneten Umlenkspiegel in einer Vorderansicht und einer Seitenansicht, und
- Figur 4: eine Laserschneidanlage.

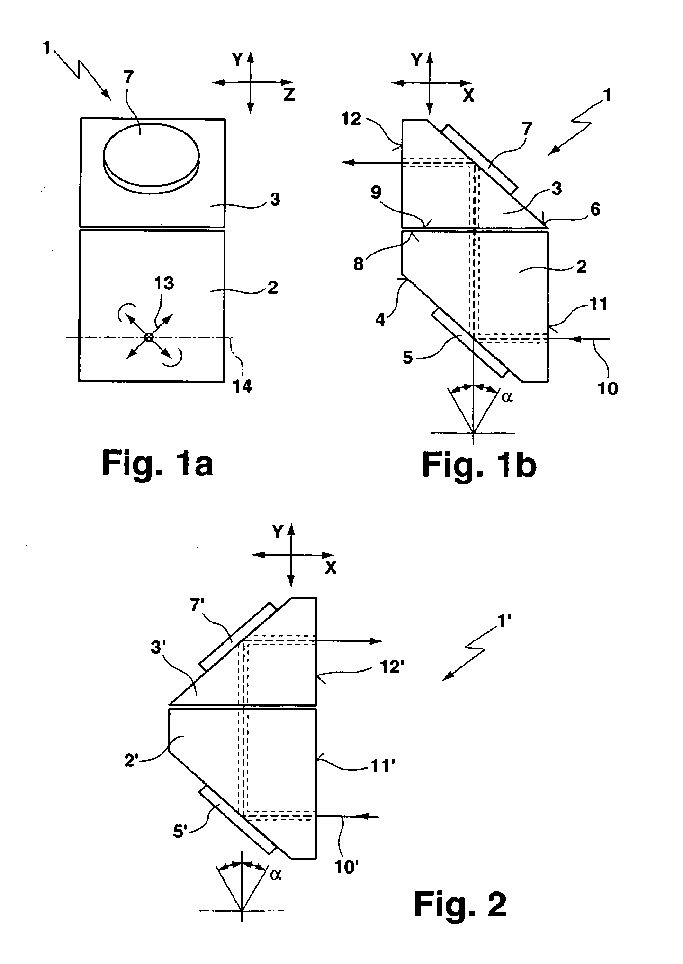

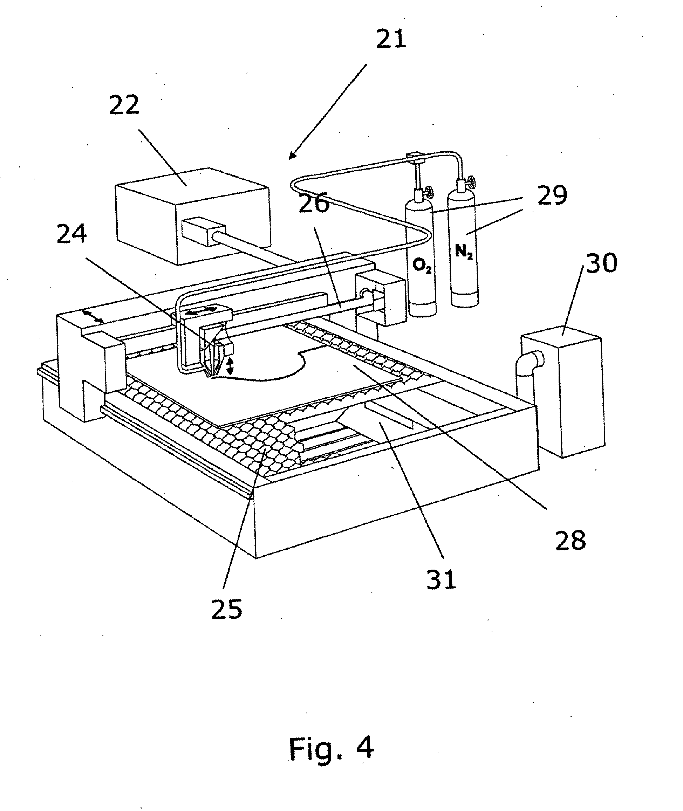

Die **Figur 1a** zeigt einer Vorderansicht in der (X, Y)-Ebene und in **Figur 1b** in einer Seitenansicht in der (Y, Z)-Ebene gezeigte Vorrichtung **1** zur Beeinflussung der Polarisation einer Laserstrahlung, wie sie in einer in Figur 4 bildlich dargestellten Laserschneidmaschine zum Einsatz kommen kann. Die Vorrichtung 1 weist einen ersten Teilkörper **2** und einen zweiten Teilkörper **3** mit Strahlführungskanälen auf. Der erste Teilkörper 2 weist an einer Außenseite **4** einen Phasenschieberspiegel **5** auf. Der zweite Teilkörper 3 weist an einer Außenseite **6** einen Umlenkspiegel **7** auf. Eine Außenseite **8** des ersten Teilkörpers 2 und eine Außenseite **9** des zweiten Teilkörpers 3 sind entlang einer gemeinsamen Ebene verschiebbar angeordnet.

Ein Laserstrahl **10** tritt senkrecht zu einer Strahleintrittsfläche **11** des ersten Teilkörpers 2 ein und wird an dem bezüglich der Strahleintrittsfläche unter einem Winkel von 45° angeordneten Phasenschieberspiegel 5 um 90° in Richtung auf den Umlenkspiegel 7 abgelenkt. Am Umlenkspiegel wird der Laserstrahl 10 noch einmal um 90° in der (X,Y)-Ebene abgelenkt und tritt im rechten Winkel durch eine zur Strahleintrittsfläche 11 parallele Strahlaustrittsfläche **12** des zweiten Teilkörpers 3 aus, die unter einem Winkel von 45° bezüglich des Umlenkspiegels 7 angeordnet ist. Der Laserstrahl 10 behält beim Durchtritt durch die Vorrichtung 1 seine Richtung bei, wobei er in Y-Richtung um einen durch die Bauart der Vorrichtung 1 vorgegebenen Betrag versetzt wird. Die Anordnung von Umlenkspiegel 7 und Phasenschieberspiegel 5 kann bezogen auf die Strahlrichtung auch umgekehrt sein.

In der in Fig. 1 gezeigten Vorrichtung ist der Laserstrahl 10 vor der Reflexion an dem Phasenschieberspiegel 5 (weitgehend) linear polarisiert, und zwar mit einer Polarisationsrichtung **13**, die unter einem Winkel von 45° bezüglich der (X,Y)-Ebene ausgerichtet ist. Um nach der Reflexion am Phasenschieberspiegel 5 zirkulare Polarisation zu erhalten, muss der Betrag der Feldstärken der elektrischen Lichtwelle des einfallenden Strahls senkrecht zur Einfallsebene (s-Polarisation) gleich groß sein wie der Betrag parallel zur Einfallsebene (p-Polarisation), was durch die Ausrichtung der Polarisationsrichtung 13 unter 45° zur Einfallsebene gewährleistet werden kann.

Der Phasenschieberspiegel 5 ist unter einem Winkel von 45° bezüglich des einfallenden Laserstrahls 10 angeordnet und weist eine Phasenschiebecharakteristik in Abhängigkeit vom Einfallswinkel auf, die bei einem Einfallswinkel von 45° eine Phasenverschiebung um 90° bewirkt. Die Vorrichtung 1, wie sie in Fig. 1 gezeigt ist, dient somit der Umwandlung eines einfallenden, linear polarisierten Laserstrahls 10 in einen ausfallenden, zirkular polarisierten Laserstrahl 10 durch Reflexion am Phasenschieberspiegel 5.

Der Zweck der Vorrichtung 1 besteht nun darin, Abweichungen von der zirkularen Polarisation des Laserstrahls 10, der die Vorrichtung 1 verlässt, so einzujustieren, dass zusammen mit den Abweichungen der übrigen Umlenkspiegel der Strahlführung eine optimal mögliche Güte der zirkularen Polarisation am Laserbearbeitungskopf (Laserschneidkopf) ankommt. Diese Abweichungen können z.B. durch Phasenverschiebungen an Umlenkspiegeln auftreten. Die Abweichung von der zirkularen Polarisation kann an einem in Figur 4 bildlich dargestellten Schneidkopf der Laserschneidanlage mittels eines geeigneten optischen Sensors ermittelt werden.

Zur Korrektur der Phasenfehler muss der Einfallswinkel, unter dem der Laserstrahl 10 auf den Phasenschieberspiegel 5 auftrifft, verändert werden. Dies soll durch Drehung um eine Drehachse **14** geschehen, welche senkrecht zur Einfallsebene ((X,Y)-Ebene) des Laserstrahls 10 auf den Phasenschieberspiegel 5 ausgerichtet ist (d.h. in Z-Richtung). Die Drehachse 14 verläuft in Fig. 1 unterhalb des Mittelpunkts des scheibenförmigen Phasenschieberspiegels 5, kann aber entlang der Y-Richtung an einen beliebigen anderen Ort verschoben sein. Die Drehachse muss nicht zwingend durch den Mittelpunkt verlaufen.

Durch Drehung um die Drehachse 14 wird die gesamte Vorrichtung 1 um einen Drehwinkel α gedreht. Durch die Drehung verändert sich der Einfallswinkel des Laserstrahls 10 und damit die durch den Phasenschieberspiegel 5 hervorgerufene Phasenverschiebung, welche von der Art der Beschichtung abhängig ist. Eine Abschätzung ergibt, dass sich die erforderlichen Drehwinkel α im Bereich unterhalb von 2° bewegen.

Durch die parallele Ausrichtung des Phasenschieberspiegels 5 und des Umlenkspiegels 7 ist die Richtung des Laserstrahls 10 beim Austritt aus der Vorrichtung 1 identisch mit der Richtung beim Eintritt. Ein über den Strahlversatz in Y-Richtung, wie er bei der ungedrehten, in Fig. 1 gezeigten Vorrichtung vorhanden ist, hinausgehender Strahlversatz wird durch die Drehung um den Drehwinkel a hervorgerufen. Dieser Strahlversatz kann durch eine Verschiebung des ersten Teilkörpers 2 relativ zum zweiten Teilkörper 3 entlang einer Ebene in (X,Z)-Richtung, die von den beiden aneinander anliegenden Außenseiten 8, 9 der Vorrichtung 1 gebildet wird, kompensiert werden. Hierdurch ist gewährleistet, dass eine Polarisationsoptimierung stattfindet, ohne dass sich die Lage und Richtung des austretenden Laserstrahls 10 verändern.

Es sei noch darauf hingewiesen, dass selbstverständlich die Strahleinfalls- und Ausfallsrichtungen vertauscht werden können und auch ein spiegelbildlicher Aufbau der Vorrichtung 1 möglich ist.

**Figur 2** zeigt eine Vorrichtung **1',** welche im Aufbau und in der Funktionsweise der Vorrichtung 1 von Fig. 1 entspricht. Ein erster Teilkörper **2'** weist einen Phasenschieberspiegel **5',** ein zweiter Teilkörper **3'** einen Umlenkspiegel **7'** auf. Eine Strahleintrittsfläche **11'** des ersten Teilkörpers 2' und eine Strahlaustrittsfläche **12'** des zweiten Teilkörpers 3' liegen in einer gemeinsamen Ebene. Die Strahlausfallsrichtung eines aus der Vorrichtung austretenden Laserstrahls **10'** ist hierbei der Strahleinfallsrichtung entgegengesetzt.

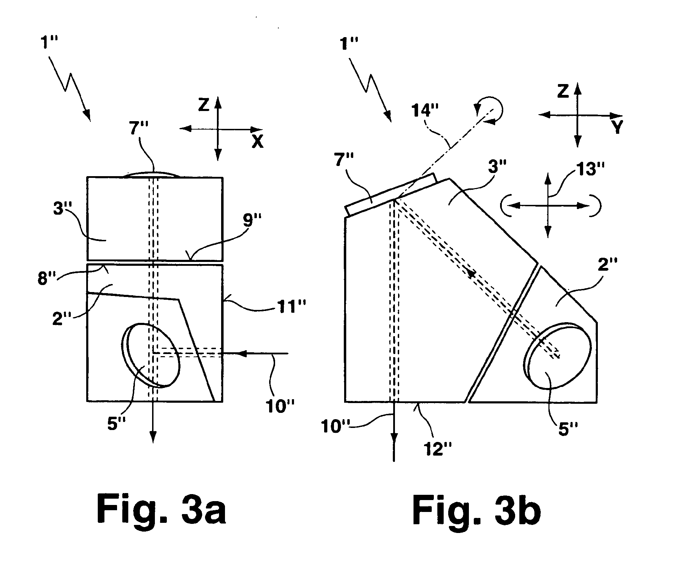

**Figur 3a** zeigt in einer Vorderansicht in der (X, Z)-Ebene und **Fig. 3b** in einer Seitenansicht in der (Y, Z)-Ebene eine Vorrichtung **1"** zur Polarisationsoptimierung, bei der die Strahleinfallsrichtung eines Laserstrahls **10"** rechtwinklig zu einer Strahleintrittsrichtung angeordnet ist. Der Strahleintritt des Laserstrahls 10" in einen ersten Teilkörper **2"** der Vorrichtung 1" erfolgt in X-Richtung senkrecht zu einer Strahleintrittsfläche **11"** des ersten Teilkörpers. Der Laserstrahl 10" ist vor der Reflexion an einem Phasenschieberspiegel **5"** linear polarisiert, und zwar mit einer Polarisationsrichtung **13"** in Z-Richtung. Der Laserstrahl 10" könnte alternativ auch in Y-Richtung polarisiert sein, wie durch den Doppelpfeil in Klammern angedeutet. Die Flächennormale des Phasenschieberspiegels 5" ist in Bezug auf die (Y,Z)-Ebene um einen Winkel von 45° gedreht. Der in X-Richtung auf den Phasenschieberspiegel 5" auftreffende Laserstrahl 10" wird von diesem in die (Y,Z)-Ebene reflektiert und trifft auf einen Umlenkspiegel **7",** der an einer Außenseite eines zweiten Teilkörpers **3"** angebracht ist. Der Laserstrahl 10" wird durch den Umlenkspiegel 7", dessen Flächennormale ebenfalls in der (Y,Z)-Ebene liegt, in Z-Richtung umgelenkt und verlässt die Vorrichtung 1" durch eine Strahlaustrittsfläche 12" des zweiten Teilkörpers 3".

Die Drehung um den Winkel α erfolgt analog wie in den Fig. 1 und 2 um eine Drehachse **14",** welche senkrecht zur Einfallsebene des Phasenschieberspiegels 5" ausgerichtet ist, wobei die Lage der Drehachse nicht vorgegeben ist. In einer von einer Außenseite **8"** des ersten Teilkörpers 2" und einer angrenzenden Außenseite **9"** des zweiten Teilkörpers 3" gebildeten Ebene kann der erste Teilkörper 2" in Bezug auf den zweiten Teilkörper 3" zur Korrektur eines Strahlversatzes, der durch die Drehung um den Winkel α hervorgerufen wird, verschoben werden.

Selbstverständlich ist es auch möglich, Vorrichtungen herzustellen, die einen anderen als einen zirkularen Polarisationsgrad am Schneidkopf einstellen, indem der Phasenschieberspiegel unter einem anderen Einfallswinkel betrieben wird. Durch geeignete Messoptiken an der Position des ausgebauten Schneidkopfs kann die durch Umlenkspiegel hervorgerufene Phasenverschiebung erstmals am Betriebsbeginn der Laserschneidanlage justiert werden. Es ist alternativ auch möglich, das Messergebnis zur Anpassung der Phasenverschiebung in einem Regelkreis zu verwenden, so dass Phasenverschiebungen, die während des Betriebs der Laserschneidanlage z.B. durch Temperaturveränderungen hervorgerufen werden, kompensiert werden können. Die Drehung der Vorrichtung um die Drehachse sowie die Verschiebung der Teilkörper gegeneinander werden mittels geeigneter Dreheinheiten bzw. Verschiebeeinheiten bewerkstelligt, wie sie dem Fachmann auf dem Gebiet der Optik geläufig sind.

Aus der **Figur 4** ist der Aufbau einer Laserbearbeitungsanlage **21** zum Laserschneiden mit einem CO₂-Laser **22,** einem Laserbearbeitungskopf **24** und einer Werkstückauflage **25** ersichtlich. Ein erzeugter Laserstrahl **26** wird mithilfe von Umlenkspiegeln zum Laserbearbeitungskopf 24 geführt und mithilfe von Spiegeln auf ein Werkstück **28** gerichtet. In die Strahlführung des Laserstrahls 26 kann die erfindungsgemäße Vorrichtung an beliebiger Stelle eingebaut werden.

Bevor eine durchgängige Schnittfuge entsteht, muss der Laserstrahl 26 das Werkstück 28 durchdringen. Das Blech 8 muss an einer Stelle punktförmig geschmolzen oder oxidiert werden, und die Schmelze muss ausgeblasen werden.

Beim langsamen Einstechen mit einer Rampe kann die Laserleistung allmählich erhöht, reduziert und über einen bestimmten Zeitraum konstant gehalten werden, bis das Einstechloch erzeugt ist. Sowohl das Einstechen als auch das Laserschneiden werden durch Hinzufügen eines Gases unterstützt. Als Schneidgase **29** können Sauerstoff, Stickstoff, Druckluft und/oder anwendungsspezifische Gase eingesetzt werden. Welches Gas letztendlich verwendet wird, ist davon abhängig, welche Materialien geschnitten und welche Qualitätsansprüche an das Werkstück gestellt werden.

Dort, wo der Laserstrahl 26 auf das Blech 28 auftrifft, wird das Material geschmolzen und zum größten Teil oxidiert. Die entstandene Schmelze wird zusammen mit den Eisenoxiden ausgeblasen. Entstehende Partikel und Gase können mithilfe einer Absaugeinrichtung **30** aus einer Absaugkammer **31** abgesaugt werden.

## Patentansprüche

1. Vorrichtung (1; 1'; 1") zur Beeinflussung der Polarisation einer Laserstrahlung mithilfe eines Phasenschieberspiegels (5; 5'; 5") und eines die Laserstrahlung umlenkenden Elements (7; 7'; 7"), wobei der Phasenschieberspiegel (5; 5'; 5") auf einer Außenseite (4) eines ersten Teilkörpers (2; 2'; 2") und das umlenkende Element (7; 7'; 7") auf einer Außenseite (6) eines zweiten Teilkörpers (3; 3'; 3") angebracht sind, und wobei der erste Teilkörper (2; 2'; 2") und der zweite Teilkörper (3; 3';3") mittels einer Dreheinheit um einen vorgebbaren Drehwinkel (α) um eine gemeinsame Drehachse (14; 14") drehbar sind, **dadurch gekennzeichnet, dass** zwei weitere Außenseiten (8, 9; 8",9") der beiden Teilkörper (2, 3; 2', 3'; 2", 3") einander gegenüber liegend verschiebbar angeordnet sind.

2. Vorrichtung nach Anspruch 1, **dadurch gekennzeichnet, dass** Strahlführungskanäle in den Teilkörpern (2, 3; 2', 3') für einfallende und ausfallende Laserstrahlung (10, 10') parallel und um einen vorgebbaren Betrag zueinander versetzt verlaufen.

3. Vorrichtung nach Anspruch 1, **dadurch gekennzeichnet, dass** Strahlführungskanäle in den Teilkörpern (2"; 3") für einfallende und ausfallende Laserstrahlung (10") unter einem Winkel von 90° zueinander angeordnet sind.

4. Laserbearbeitungsanlage (21) mit einer Strahlführung für einen Laserstrahl (26), in der eine Vorrichtung nach einem der Ansprüche 1 bis 3 angeordnet ist.

5. Laserbearbeitungsanlage nach Anspruch 4, **dadurch gekennzeichnet, dass** die Drehachse (14; 14") senkrecht zur einer Lichteinfallsebene des Phasenschieberspiegels (5; 5'; 5") ausgerichtet ist.

6. Laserbearbeitungsanlage nach Anspruch 4 oder 5, **dadurch gekennzeichnet, dass** das umlenkende Element (7) und der Phasenschieberspiegel (5) derart angeordnet sind, dass einfallende und ausfallende Laserstrahlung (10, 10') parallel und um einen vorgebbaren Betrag zueinander versetzt verlaufen.

7. Laserbearbeitungsanlage nach einem der Ansprüche 4 bis 6, **dadurch gekennzeichnet, dass** das umlenkende Element (7') und der Phasenschieberspiegel (5') derart angeordnet sind, dass einfallende und ausfallende Laserstrahlung (10') parallel zueinander und in entgegengesetzter Richtung verläuft.

8. Laserbearbeitungsanlage nach Anspruch 4 oder 5, **dadurch gekennzeichnet, dass** das umlenkende Element (7") und der Phasenschieberspiegel (5") derart angeordnet sind, dass eine Umlenkung der ausfallenden Laserstrahlung um 90° im Vergleich zur einfallenden Laserstrahlung bewirkt wird.

## Claims

1. Device (1; 1'; 1") for controlling the polarization of laser radiation using a phase shift mirror (5; 5'; 5") and an element (7; 7'; 7") that deflects the laser radiation, wherein the phase shift mirror (5; 5'; 5") is mounted to an outer side (4) of a first partial body (2; 2'; 2") and the deflecting element (7; 7'; 7") is mounted to an outer side (6) of a second partial body (3; 3'; 3"), and wherein the first partial body (2; 2'; 2") and the second partial body (3; 3'; 3") can be rotated about a common axis of rotation (14; 14") through a predeterminable angle of rotation (α) by means of a turning unit, **characterized in that** two further outer sides (8, 9; 8", 9") of the two partial bodies (2, 3; 2', 3'; 2", 3") are disposed opposite to each other in a displaceable manner.

2. Device according to claim 1, **characterized in that** beam guiding channels in the partial bodies (2, 3; 2', 3') for incident and emerging laser radiation (10, 10') extend parallel to each other and offset from each other by an amount that can be predetermined.

3. Device according to claim 1, **characterized in that** beam guiding channels in the partial bodies (2"; 3") for incident and emerging laser radiation (10") are disposed at an angle of 90° with respect to each other.

4. Laser processing system (21) comprising a beam guidance for a laser beam (26), which contains a device in accordance with any one of the claims 1 through 3.

5. Laser processing system according to claim 4, **characterized in that** the axis of rotation (14; 14") is oriented perpendicularly to a light incidence plane of the phase shift mirror (5; 5'; 5").

6. Laser processing system according to claim 4 or 5, **characterized in that** the deflecting element (7) and the phase shift mirror (5) are disposed in such a manner that the incident and the emerging laser radiation (10, 10') extend parallel to each other and offset from each other by an amount that can be predetermined.

7. Laser processing system according to any one of the claims 4 through 6, **characterized in that** the deflecting element (7') and the phase shift mirror (5') are disposed in such a manner that the incident and the emerging laser radiation (10') extend parallel to each other but in opposite directions.

8. Laser processing system according to claim 4 or 5, **characterized in that** the deflecting element (7") and the phase shift mirror (5") are disposed in such a manner that the emerging laser radiation is deflected through 90° with respect to the incident laser radiation.

## Revendications

1. Dispositif (1 ; 1' ; 1") pour influencer la polarisation d'un rayonnement laser au moyen d'un miroir déphaseur (5 ; 5' ; 5") et d'un élément (7 ; 7' ; 7") qui dévie le rayonnement laser, le miroir déphaseur (5 ; 5' ; 5") étant installé sur une face extérieure (4) d'un premier corps partiel (2 ; 2' ; 2") et l'élément déviateur (7 ; 7' ; 7") sur une face extérieure (6) d'un deuxième corps partiel (3 ; 3' ; 3"), et le premier corps partiel (2 ; 2' ; 2") et le deuxième corps partiel (3 ; 3' ; 3") pouvant tourner au moyen d'une unité de rotation d'un angle de rotation (α) prédéterminable autour d'un axe de rotation commun (14 ; 14"), **caractérisé en ce que** deux autres faces extérieures (8, 9 ; 8", 9") des deux corps partiels (2, 3 ; 2', 3' ; 2", 3") sont disposées l'une en face de l'autre avec possibilité de coulissement l'une par rapport à l'autre.

2. Dispositif selon la revendication 1, **caractérisé en ce que** des canaux de guidage de faisceau dans les corps partiels (2, 3 ; 2', 3') pour le rayonnement laser incident et émergent (10, 10') s'étendent parallèlement et avec un décalage mutuel dont la valeur est prédéterminable.

3. Dispositif selon la revendication 1, **caractérisé en ce que** des canaux de guidage de faisceau dans les corps partiels (2" ; 3") pour le rayonnement laser incident et émergent (10") sont disposés selon un angle de 90° l'un par rapport à l'autre.

4. Installation d'usinage au laser (21) avec un guidage de faisceau pour un faisceau laser (26), dans laquelle est disposé un dispositif selon l'une des revendications 1 à 3.

5. Installation d'usinage au laser selon la revendication 4, **caractérisée en ce que** l'axe de rotation (14 ; 14") est orienté perpendiculairement à un plan d'incidence lumineuse du miroir déphaseur (5 ; 5' ; 5").

6. Installation d'usinage au laser selon la revendication 4 ou 5, **caractérisée en ce que** l'élément déviateur (7) et le miroir déphaseur (5) sont disposés de façon que les rayonnements laser incident et émergent (10, 10') s'étendent parallèlement et avec un décalage mutuel dont la valeur est prédéterminable.

7. Installation d'usinage au laser selon l'une des revendications 4 à 6, **caractérisée en ce que** l'élément déviateur (7') et le miroir déphaseur (5') sont disposés de façon que les rayonnements laser incident et émergent (10') s'étendent parallèlement l'un à l'autre et dans une direction opposée.

8. Installation d'usinage au laser selon la revendication 4 ou 5, **caractérisée en ce que** l'élément déviateur (7") et le miroir déphaseur (5") sont disposés de façon à provoquer une déviation du rayonnement laser émergent de 90° par rapport au rayonnement laser incident.
